# EUROPEAN PATENT APPLICATION

(11) **EP 4 648 237 A1**
(43) Date of publication of application: **12.11.2025**
(21) Application number: 25174094.0
(22) Date of filing: 02.05.2025
(51) Int. Cl.: H02G 3/00, F16L 3/13, H02G 3/30, H02G 3/32

(54) **WIRE RAIL SYSTEMS**

(30) Priority: 06.05.2024 US 202463643274 P; 18.11.2024 US 202463721813 P; 23.04.2025 US 202519187674
(71) Applicant: HellermannTyton Corporation, Milwaukee, WI 53224 (US)
(72) Inventor: Zick, Jonathan, Waukesha, Wisconsin (US); Klos, Scott G., Grafton, Wisconsin (US); Cors, Mark W., St. Francis, Wisconsin (US)
(74) Representative: Hernandez, Yorck

(57) **Abstract**

The problem of inefficient and unaesthetic linear routing of wires and other elongated objects using individual cable tie mounts on a mount surface of a structure is solved by providing a wire rail system (e.g., a mount) that includes an elongated base portion configured to attach to the structure and an elongated saddle portion having a plurality of connector regions spaced apart from the elongated base portion and extending along a portion of the elongated base portion. The connector regions are configured to receive at least one object support connector for attachment of an object to the mount.

## Description

### INCORPORATION BY REFERENCE

This application claims the benefit of U.S. Provisional Application No. 63/643,274 filed on May 6, 2024, and U.S. Provisional Application No. 63/721,813 filed on November 18, 2024, the disclosures of which are incorporated herein by reference.

### BACKGROUND

Various systems use elongated objects, such as cables, hydraulic lines, or wires, to connect components located in different locations. For example, during installation and/or maintenance of an industrial automation system, a technician might be tasked with physically routing a wire from a machine cabinet, across a bridge, and along a conveyor to connect to a motor. Adhesive-backed cable tie mounts (CTMs) are commonly used to secure wires to a mount surface of a structure during such a routing task. An adhesive-backed cable tie mount typically consists of a body for attaching the wire, often using a cable tie, and an adhesive backing (e.g., a double-sided adhesive tape) for adhering to the mount surface. To install the adhesive-backed cable tie mount, a release liner is peeled off the adhesive backing and the adhesive-backed cable tie mount is pressed onto the desired location. The wire can then be attached to the adhesive-backed cable tie mount, usually by looping a cable tie around the object and through a saddle portion of the body of the adhesive-backed cable tie mount.

While individual adhesive-backed cable tie mounts offer flexibility in routing, their small adhesive area can pose challenges. Technicians may need to clean the mount surface and select a flat area for proper adhesion. Furthermore, adhesive-backed cable tie mounts in high-stress areas (e.g., curves, sharp turns, moving parts) and/or when supporting heavy or rigid wires are prone to adhesive failure (delamination). Additionally, routing requires a technician to plan the number, spacing, and placement of adhesive-backed cable tie mounts. The technician then installs the adhesive-backed cable tie mounts and carefully organizes the wires to minimize space, prevent tangling, facilitate identification, and improve aesthetics. These challenges can make the efficient and aesthetic linear routing of wires and other elongated objects with traditional adhesive-backed cable tie mounts difficult.

### SUMMARY

This document describes wire rail systems for the linear routing of elongated objects. In implementations, the techniques and apparatuses described include a mount with an elongated base portion configured to attach to a structure and an elongated saddle portion spaced apart from the elongated base portion. The elongated saddle portion may be configured to attach to the elongated base portion. The elongated saddle portion extends along a portion of the elongated base portion and defines a plurality of connector regions configured to receive an object support connector for attachment of an elongated object to the mount.

In implementations, the techniques and apparatuses described include an object support connector configured to attach an elongated object to a fixing. The object support connector includes a clip portion configured to connect with the fixing and an object support that extends from the clip portion and is configured to support the elongated object. The clip portion includes a first elongated arm and a second elongated arm spaced apart from the first elongated arm to define a slot therebetween configured to receive a portion of the fixing.

This Summary is provided to introduce simplified concepts of wire rail systems which are further described below in the Detailed Description and are illustrated in the Drawings. This Summary is not intended to identify essential features of the claimed subject matter, nor is it intended for use in determining the scope of the claimed subject matter.

### BRIEF DESCRIPTION OF THE DRAWINGS

The details of one or more implementations of wire rail systems are described with reference to the following Drawings.
FIG. 1 is a schematic representation of a wire rail system.
FIG. 2 is a perspective view of a wire rail system.
FIG. 3 is a partial, first side view of the wire rail system of FIG. 2.
FIG. 4 is a cross-sectional view of the wire rail system of FIG. 2.
FIG. 5 is a perspective view of a wire rail system.
FIG. 6 is a perspective view of an object support connector for a wire rail system.
FIG. 7 is a perspective view of an object support connector for a wire rail system.
FIG. 8 is a perspective view of an object support connector for a wire rail system.
FIG. 9 is a disconnected perspective view of a wire rail system.
FIG. 10 is a cross-sectional view of the wire rail system of FIG. 9, shown connected.
FIG. 11 is a perspective view of a wire rail system.
FIG. 12 is a perspective view of an object support connector for the wire rail systems of FIGS. 9 and 11.
FIG. 13 is a perspective view of a connector for a wire rail system.
FIG. 14 is a perspective view of a connector for a wire rail system.

### DETAILED DESCRIPTION

Described herein are implementations of wire rail systems for the linear routing of elongated objects. A wire rail system is a mount that provides a rail structure to which wires and other elongated objects can be routed. The problem of inefficient and unaesthetic linear routing of wires and other elongated objects using individual cable tie mounts (CTMs) is solved by providing a wire rail system (e.g., a mount) that includes an elongated base portion configured to attach to the structure and an elongated saddle portion having a plurality of connector regions spaced apart from the elongated base portion and extending along a portion of the elongated base portion. The connector regions are configured to receive at least one object support connector for attachment of an elongated object to the mount.

In aspects, the problem may additionally or alternatively be solved by providing a wire rail system (e.g., an object support connector) configured to attach an elongated object to a fixing, which includes a clip portion configured to connect with the fixing and an object support that extends from the first elongated arm and is configured to support the object. The clip portion includes a first elongated arm and a second elongated arm spaced apart from the first elongated arm to define a slot therebetween configured to receive a portion of the fixing.

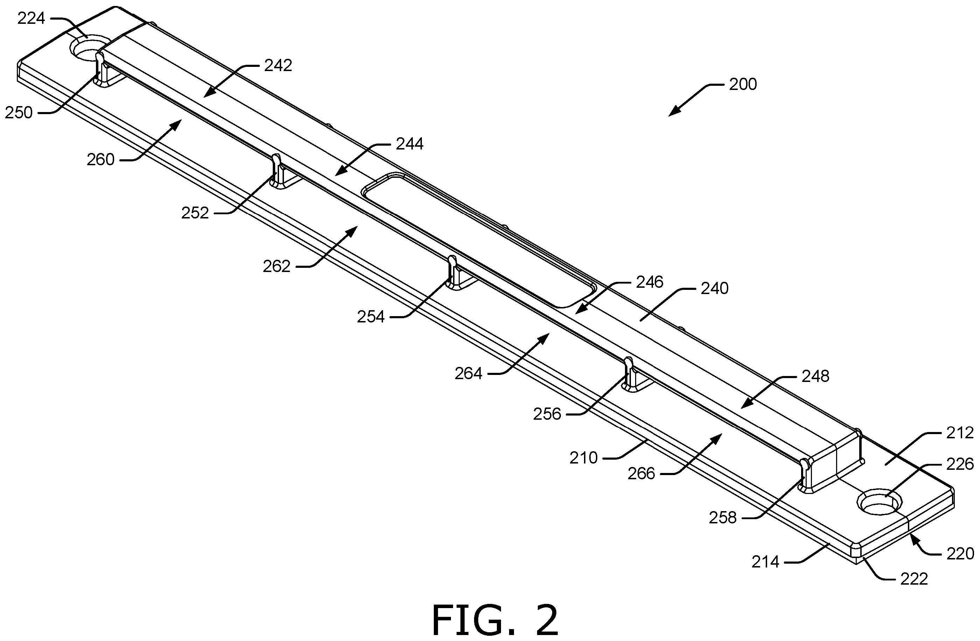

In this description, the first digit(s) of a reference character (e.g., call-out number) may correlate with the first figure number in which the reference character is labeled. For example, reference characters that start with a 2 (e.g., top side 212, bottom side 214) may represent details first called out with respect to FIG. 2. Further, the same reference characters in different Drawings may identify the same or similar features, elements, and/or parts.

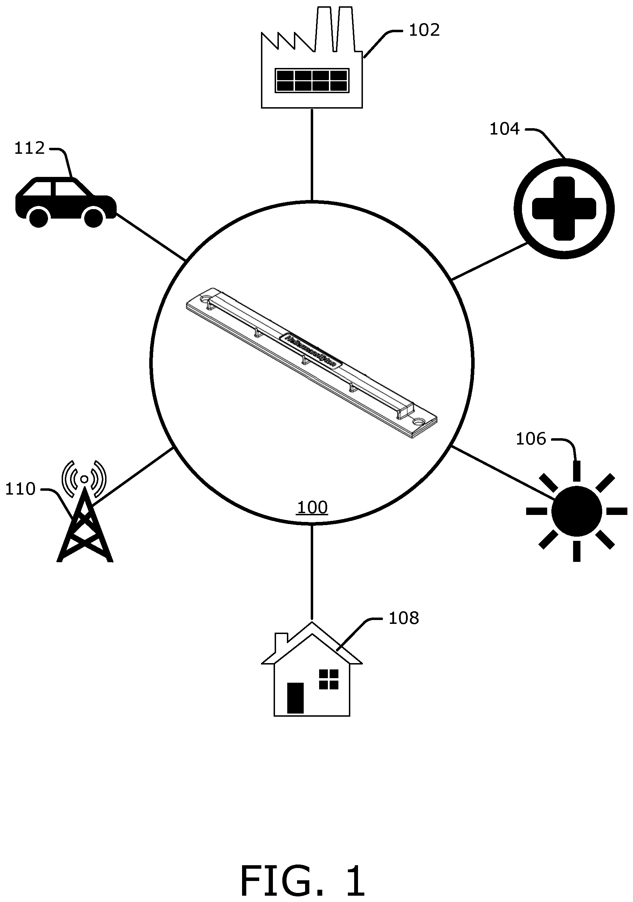

Referring initially to FIG. 1, illustrated is a schematic representation of a wire rail system 100 (e.g., mount, object support connector). This disclosure describes aspects of wire rail systems 100, which are configured for routing objects from a first location to a second location. As discussed herein, the wire rail systems 100 may have particular application in the industrial and manufacturing markets 102 (e.g., for routing electrical cables from a first location to a second location). While this disclosure, including the Drawings, references aspects and segments of these markets, wire rail systems 100 may have application to the routing objects from a first location to a second location in other markets, including but not limited to healthcare markets 104, energy and utility markets 106, consumer and commercial markets 108, telecommunications and data infrastructure markets 110, and/or transportation markets 112.

Industrial and manufacturing markets 102 include industrial automation and equipment, control panels, machine building, machinery, electrical enclosures, material handling systems (e.g., conveyors), cooling systems, heavy equipment (e.g., construction and mining machinery), agricultural technology (e.g., farming equipment), chemical (e.g., chemical processing equipment), robotics (e.g., automated robotic systems), original equipment manufacturers (OEMs), mechanical components, and mechanical systems. Healthcare markets 104 include medical equipment and technology, dental equipment and technology, and the like. Energy and utility markets 106 include renewable energy systems (e.g., solar, wind, hydroelectric), power generation and distribution, industrial lighting, and commercial lighting. Consumer and commercial markets 108 include appliances (e.g., home and commercial appliances), heating, ventilation, and air conditioning (HVAC), and consumer electronic devices. Telecommunications and data infrastructure markets 110 include telecommunications (e.g., general telecom services), communications (e.g., communication systems and equipment), internet service providers (ISPs), cable television companies (CATV), infrastructure for data storage and processing (e.g., data centers), broadband (e.g., broadband internet services), and datacom (e.g., data communications equipment). Transportation markets 112 include manufacturing and components for vehicles, trucks, automobiles, rail conveyances (e.g., trains), marine craft (e.g., ships, boats), aircraft, and aerospace.

Referring now to FIGs. 2-4, illustrated is a second aspect of a wire rail system. In the second aspect, the wire rail system is a mount 200 that is configured for routing elongated objects from a first location to a second location. The mount 200 includes an elongated base portion 210 and an elongated saddle portion 240. The elongated saddle portion 240 may be spaced apart from the elongated base portion 210. The elongated saddle portion 240 (e.g., a connector region of the elongated base portion 210) is configured to receive an object support connector and/or an elongated object (e.g., wire), for example, via the object support connector. In aspects, one or more of the elongated base portion 210 or the elongated saddle portion 240 may be non-elongated.

As used herein, the terms "object" and "elongated object" are used to refer to all types and forms of elongated objects, including, but not limited to cables, wires, wire harnesses, hydraulic lines, pneumatic lines, optical fiber, textiles, plastic, pipes, tubing, conduits, elongated articles, and bundles of one or more of the same. In aspects, one or more components of the mount 200 (e.g., the elongated base portion 210 and the elongated saddle portion 240) are integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more of the components of the mount (e.g., elongated saddle portion, elongated base portion) can be assembled from separate plastic parts and fixed together through welding, solvents, adhesives, and the like.

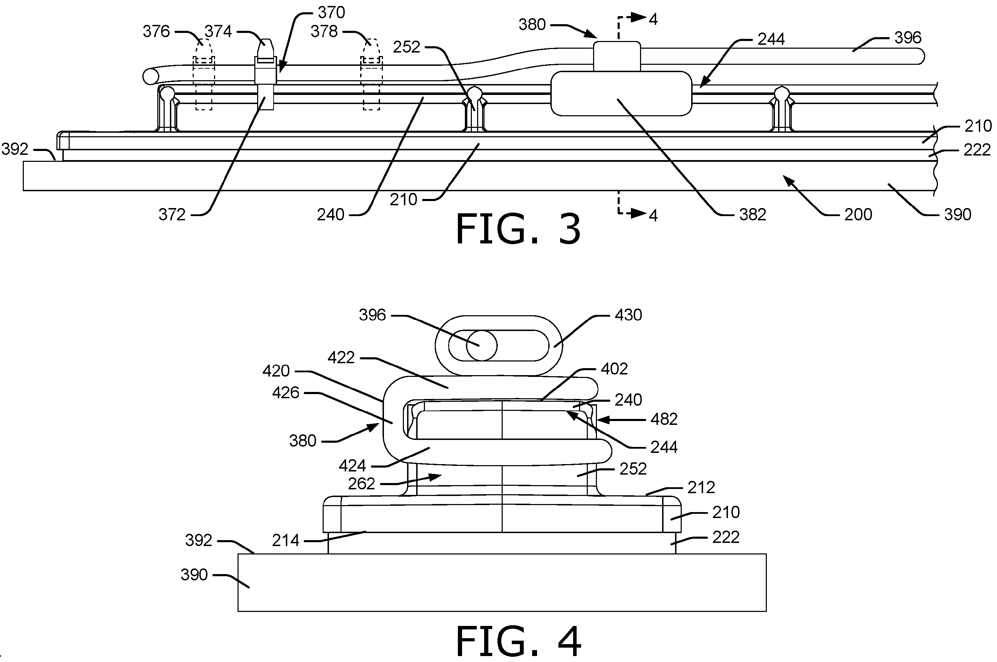

The elongated saddle portion 240 may extend along a substantial portion of the elongated base portion 210. The elongated saddle portion 240 defines a plurality of connector regions (e.g., connector region 242, connector region 244, connector region 246, connector region 248), which may be spaced apart from the elongated base portion 210 and may extend along a portion of the elongated base portion 210. The connector regions are configured to receive an object support connector (e.g., object support connector 370 of FIG. 3, object support connector 380 of FIG. 3) for attachment of the object (e.g., wire 396 of FIG. 3) to the mount 200. The object support connector may be configured to retain the object generally parallel to the length of the mount.

The connector regions (e.g., connector region 242, connector region 244, connector region 246, connector region 248) are illustrated in FIG. 2 as spaced apart on the elongated saddle portion 240. A connector region defines at least one passageway (e.g., passageway 260, passageway 262, passageway 264, passageway 266) through the elongated saddle portion 240, for example, between two opposing supports. In the aspect of FIG. 2, the passageway 260 is defined between support 250 and support 252, passageway 262 is defined between support 252 and support 254, passageway 264 is defined between support 254 and support 256, and passageway 266 is defined between support 256 and support 258. The passageway configured to receive an object support connector. In aspects, the passageway is configured to receive a strap (e.g., cable tie) to attach the object to the elongated saddle portion at a connector region, with a portion of the strap passed through the passageway, wrapped around the object, and tightened to attach the object to the elongated saddle portion. As used herein, the term "strap" is used to refer to all types and forms of strapping materials, including, but not limited to cable ties, plastic bands, metal bands, string, twine, wire, hook-and-loop fastener straps, and the like.

At least one connector region of the connector regions is configured to receive the object support connector (e.g., object support connector 370, object support connector 380) at variable locations. For example, as illustrated in FIG. 3, the object support connector 370 is illustrated as installable at a first position 374, at a second position 376, and/or at a third position 378. The second and third positions are illustrated in broken lines. The object support connector is configured to attach the object (e.g., wire 396) to the mount 200 at variable locations relative to the connector region (e.g., connector region 242, connector region 244, connector region 246, connector region 248) to vary the position of the object with respect to the elongated saddle portion 240. To put it another way, the object support connector may attach at a variable location such that the position of the object support connector relative to the connector region is variable. For example, the technician can loosely cinch the strap 372 to the elongated saddle portion 240 to temporarily secure the object (e.g., wire 396) in a first position and then, upon positioning the object in a final position (e.g., a second position), tightly cinch the strap 372 in place. In aspects, the position of the object support connector 380 may be variable by sliding the position of the receiver portion (e.g., slot 382) along the elongated saddle portion 240 at the connector region (e.g., connector region 242).

The elongated base portion 210 includes a top side 212 opposite a bottom side 214. It should be understood that the top side and the bottom side should not be limited to any specific orientations. The elongated saddle portion 240 includes a plurality of support pillars (e.g., support 250, support 252, support 254, support 256, support 258) that space the top side 212 from the elongated saddle portion 240. The support pillars may extend generally orthogonal to a plane of the base. One or more of the support pillars may be configured for cutting (e.g., with a cutter tool), snapping (e.g., frangible), or to otherwise be separated to allow a technician to shorten the length of the mount 200 (e.g., when the mount is too long for the space the technician wants to install it).

The elongated base portion 210 includes a mount portion 220 that is configured to connect the elongated base portion 210 to the structure 390 (illustrated in FIGS. 3 and 4). For example, the mount portion 220 may include an adhesive portion 222 that is configured to adhere to a mount surface 392 of the structure 390. The adhesive portion 222 may include a pre-applied adhesive strip that is covered by a release liner. To install the mount 200 on the structure 390, the release liner is peeled off the adhesive strip, and the adhesive portion 222 is then applied to the mount surface 392 to adhere the elongated base portion 210 to the mount surface 392. In other aspects, the mount portion 220 may include one or more fastener apertures (e.g., fastener aperture 224, fastener aperture 226) defined through the base portion 210 from the top side 212 to the bottom side 214. The fastener aperture is configured to receive a fastener (e.g., a bolt, a screw) (not illustrated) therethrough to attach the base portion 210 to the structure 390. For example, the fastener may engage a mounting aperture (e.g., a bore) that is defined in the structure (e.g., in a mount surface of the structure).

The mount portion 220 may include any suitable structure to mount to the structure 390, some additional examples of which include a fastener (e.g., a blind hole fastener, a clamp fastener, a clamp portion, a mechanical fastener, a T-nut fastener for a T-slot metal frame, a masonry mount, a push mount, a swivel mount, an arrowhead fastener, a fir-tree fastener, an edge-clip mount, a clip fastener, cradle portion, a twist-lock fastener configured for receipt into the slot of a rail, a weld stud mount, a cable attachment, a hose attachment), a magnet, a friction fit, and the like, and combinations thereof (e.g., a fastener and an adhesive fastener, an adhesive fastener and a magnet).

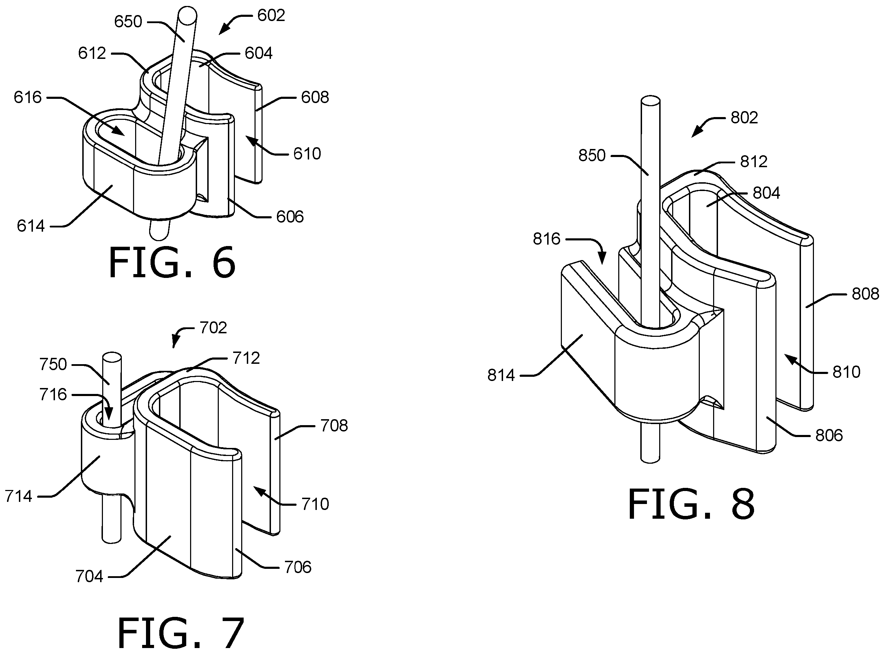

FIG. 3 illustrates two example object support connectors (e.g., object support connector 370, object support connector 380). Object support connector 370 is a strap 372 that is configured to extend through the passageway (e.g., passageway 260) of the connector region (e.g., connector region 242). The technician may assemble the strap to the elongated saddle portion 240, for example, by positioning a portion of the strap within the passageway 260, wrapping the strap around the wire 396, and then tensioning the strap around the wire. Object support connector 380 includes a receiver portion (e.g., slot 482 of FIG. 4) that is configured to slide onto the elongated saddle portion 240 at the connector region (e.g., connector region 242). Additional object support connectors, which are similar to the object support connector 380 of FIG. 3, are illustrated and described herein with respect to FIGs. 6-8.

FIG. 4 is a cross-sectional view of the mount 200 of FIG. 2, which illustrates the elongated base portion 210 attached to a structure 390. Examples of structures include machines, cabinets, housings, frames, frame rails, enclosures, vehicle chassis, panels, rails, support beams, cable routing channels, conveyor channel assemblies, and the like. A structure may include a mount surface and/or a mount aperture defined therein (e.g., a slot, a channel, a bore, a threaded hole), and the like. Object support connector 380 includes a receiver portion (e.g., slot 482) that is configured to slide onto the elongated saddle portion 240 at the connector region (e.g., connector region 242). The object support connector 380 also includes a clip portion 420 that is configured to connect with the fixing. The clip portion 420 includes a first elongated arm 422 and a second elongated arm 424 that is spaced apart from the first elongated arm to define the receiver portion (e.g., slot 482) therebetween. The slot 482 is configured to receive a portion of the fixing. For example, the slot 482 is configured to slide onto the elongated saddle portion at the connector region. The clip portion 420 may be formed of a flexible material configured to enable the clip portion 420 to flex to receive the fixing portion (e.g., connector region 244 of FIG. 2) in the slot 482 and generate a friction fit on the fixing portion. The clip portion 420 includes a cross-piece 426 that extends between proximal ends of the first and second elongated arms, and the first and second elongated arms extend away from the cross-piece 612. The object support connector 602 includes an object support 430 that extends from the clip portion 420 (e.g., from the first elongated arm 422), which is configured to support the object (e.g., wire 396). The connector region may include a saddle surface 402 that forms a saddle that is configured to support the elongated object and/or the object support connector. In the aspect illustrated in FIG. 4, the saddle surface 402 is a planar support surface. The saddle surface is not limited to a planar surface, but may be a curved surface, a V-shaped surface, a surface with an exaggerated curve, or any other suitable type of surface suitable for mounting an elongated object to.

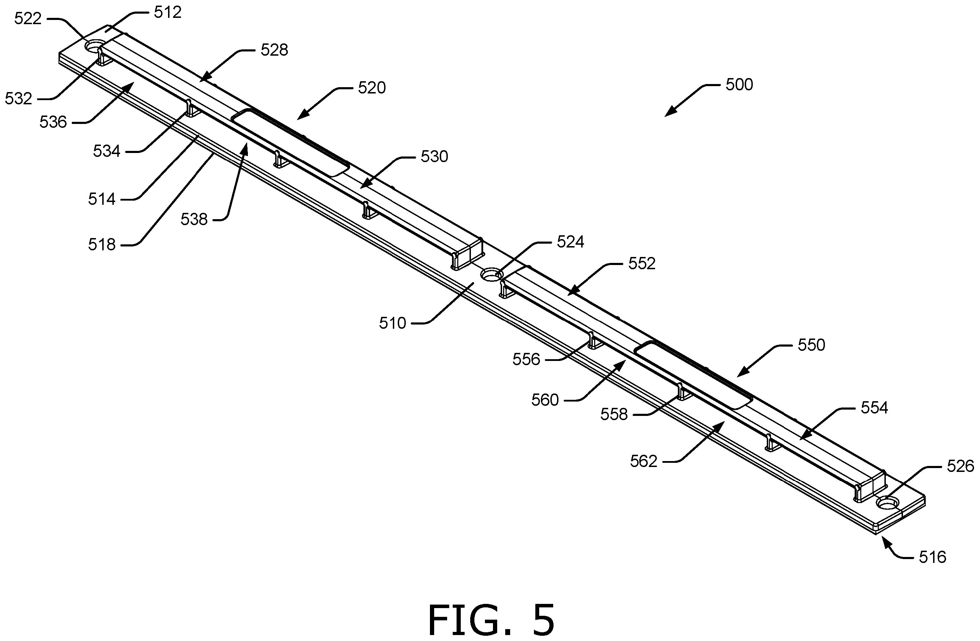

Referring now to FIG. 5, the wire rail system illustrated is a mount 500, which is configured to route objects (e.g., wires) from a first location to a second location. The mount 500 is similar to the mount 200 illustrated in FIGS. 2-4 and described above, except as detailed below. Thus, the mount 500 includes, for example, an elongated base portion 510, a top side 512, a bottom side 514, mount portion 516 (e.g., adhesive portion 518, fastener aperture 522, fastener aperture 524, fastener aperture 526), a first elongated saddle portion 520, connector regions (e.g., connector region 528, connector region 530), supports (e.g., support 532, support 534), and passageways (e.g., passageway 536, passageway 538). The mount 500 includes a second elongated saddle portion 550 that is spaced apart from the first elongated base portion 510. The first and second elongated saddle portions are linearly oriented to one another on the elongated base portion 510. The second elongated saddle portion 550 includes connector regions (e.g., connector region 552, connector region 554), supports (e.g., support 556, support 558), and passageways (e.g., passageway 560, passageway 562). In aspects, one or more components of the mount 500 (e.g., the elongated base portion 510 and at least one of the first elongated saddle portion 520 or the second elongated saddle portion 550) are integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more of the components of the mount can be assembled from separate plastic parts and fixed together through welding, solvents, adhesives, and the like.

Referring now to FIGS. 6-8, illustrated are aspects of object support connectors that are configured to attach an elongated object to a fixing (e.g., mount 100, mount 200, mount 500). As described below, the object support connectors include a clip portion that is configured to connect with the fixing and an object support that is configured to support the object. In FIG. 6, the object support connector 602 includes a clip portion 604 that is configured to connect with the fixing. The clip portion 604 includes a first elongated arm 606 and a second elongated arm 608 that is spaced apart from the first elongated arm to define a receiver portion (e.g., slot 610) therebetween. The slot 610 is configured to receive a portion of the fixing. For example, the slot 610 is configured to slide onto the elongated saddle portion at the connector region, as illustrated with respect to the object support connector 380 of the aspect illustrated in FIGS. 3 and 4. The clip portion 604 may be formed of a flexible material configured to enable the clip portion 604 to flex to receive the fixing portion (e.g., connector region 244 of FIG. 2) in the slot 610 and generate a friction fit on the fixing portion.

In aspects, the clip portion 604 may include a cross-piece 612 that extends between proximal ends of the first and second elongated arms. The first and second elongated arms may extend away from the cross-piece 612. The object support connector 602 includes an object support 614 that extends from the clip portion 604 (e.g., from the first elongated arm 606, from the second elongated arm 608, from the cross-piece 612, and the like) and is configured to support the object (e.g., wire 650). In the aspect of FIG. 6, the object support 614 has a closed loop structure that defines a conduit 616 (e.g., passageway) that is configured to receive the wire 650 therethrough. The conduit 616 may be configured to receive a strap to fasten the object to the object support 614. One or more components of the object support connector 602 (e.g., the clip portion 604 and the object support 614) may be integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more of the components of the object support connector can be assembled from separate plastic parts and fixed together through welding, solvents, adhesives, and the like.

In FIG. 7, the object support connector 702 includes a clip portion 704 that is configured to connect with the fixing. The clip portion 704 includes a first elongated arm 706 and a second elongated arm 708 that is spaced apart from the first elongated arm to define a receiver portion (e.g., slot 710) therebetween. The slot 710 is configured to receive a portion of the fixing. For example, the slot 710 is configured to slide onto the elongated saddle portion at the connector region, as illustrated with respect to the aspects of FIGS. 3 and 4. The clip portion 704 may be formed of a flexible material configured to enable the clip portion 704 to flex to receive the fixing portion (e.g., connector region 244 of FIG. 2) in the slot 710 and generate a friction fit on the fixing portion.

In aspects, the clip portion 704 may include a cross-piece 712 that extends between proximal ends of the first and second elongated arms. The first and second elongated arms may extend away from the cross-piece 712. The object support connector 702 includes an object support 714 that extends from the clip portion 704 (e.g., from the first elongated arm 706, from the second elongated arm 708, from the cross-piece 712, and the like) and is configured to support the object (e.g., wire 750). In the aspect of FIG. 7, the object support 714 has a closed loop structure that defines a conduit 716 (e.g., passageway) that is configured to receive the wire 750 therethrough. The conduit 716 may be configured to receive a strap to fasten the object to the object support 714. One or more components of the object support connector 702 (e.g., the clip portion 704 and the object support 714) may be integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more of the components of the object support connector can be assembled from separate plastic parts and fixed together through welding, solvents, adhesives, and the like.

In FIG. 8, the object support connector 802 includes a clip portion 804 that is configured to connect with the fixing. The clip portion 804 includes a first elongated arm 806 and a second elongated arm 808 that is spaced apart from the first elongated arm to define a receiver portion (e.g., slot 810) therebetween. The slot 810 is configured to receive a portion of the fixing. For example, the slot 810 is configured to slide onto the elongated saddle portion at the connector region, as illustrated with respect to the aspects of FIGS. 3 and 4. The clip portion 804 may be formed of a flexible material configured to enable the clip portion 804 to flex to receive the fixing portion (e.g., connector region 244 of FIG. 2) in the slot 810 and generate a friction fit on the fixing portion.

In aspects, the clip portion 804 may include a cross-piece 812 that extends between proximal ends of the first and second elongated arms. The first and second elongated arms may extend away from the cross-piece 812. The object support connector 802 includes an object support 814 that extends from the clip portion 804 (e.g., from the first elongated arm 806, from the second elongated arm 808, from the cross-piece 812, and the like) and is configured to support the object (e.g., wire 850). In the aspect of FIG. 8, the object support 814 has an open-ended structure that defines a cradle portion 816 that is configured to receive the wire 850 therein. The cradle may face any direction. In aspects, the cradle portion 816 may be configured to receive a strap to fasten the object to the object support 814. One or more components of the object support connector 802 (e.g., the clip portion 804 and the object support 814) may be integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more of the components of the object support connector can be assembled from separate plastic parts and fixed together through welding, solvents, adhesives, and the like.

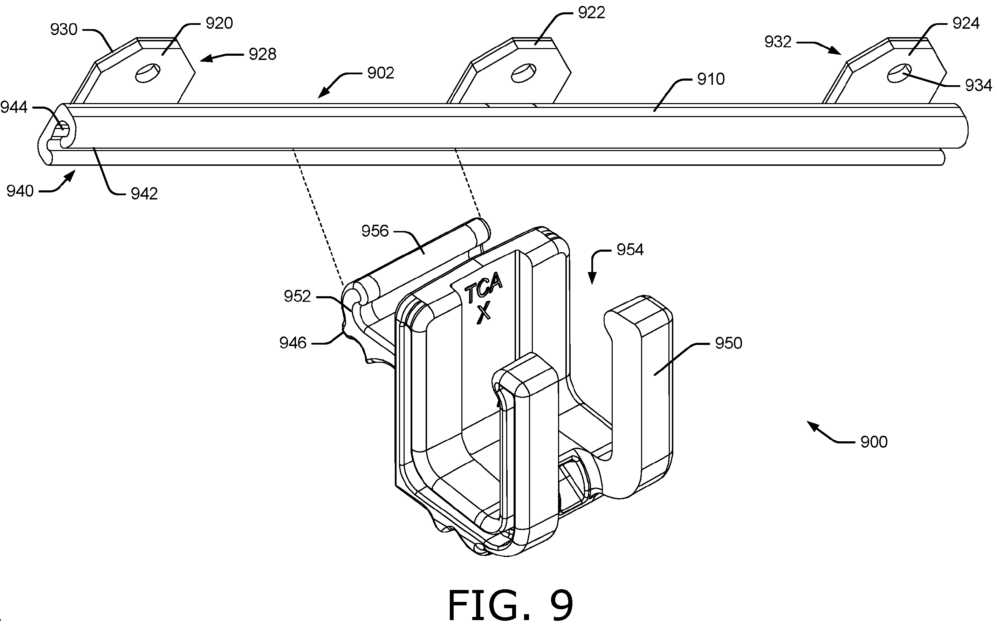

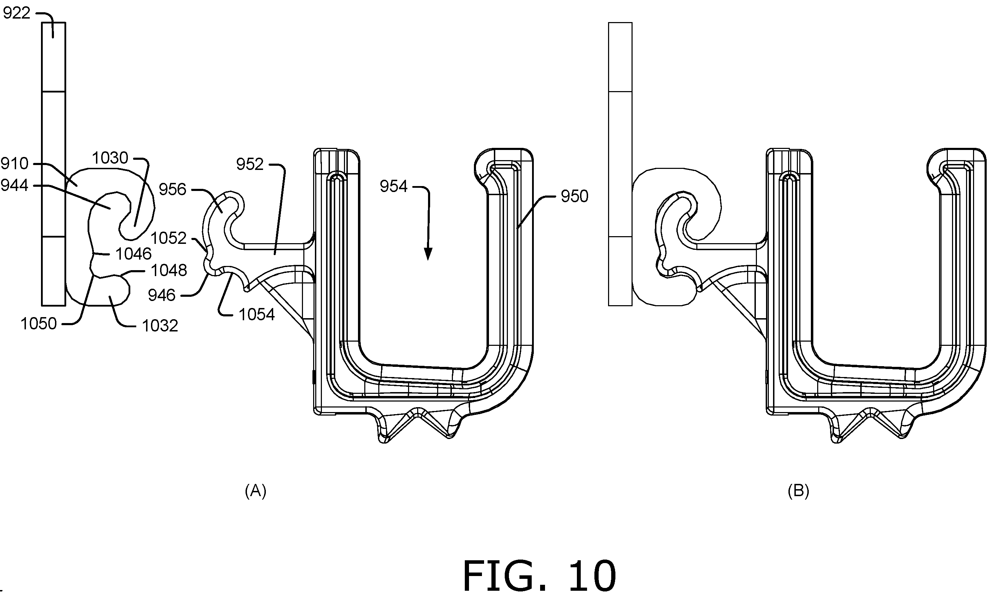

FIGS. 9 and 10 illustrate another implementation of a wire rail system 900 that is configured for routing elongated objects from a first location to a second location. The wire rail system 900 includes an elongated wire rail 910 that extends from and/or between at least one anchor point (e.g., anchor point 920, anchor point 922, anchor point 924). The anchor points may space the wire rail 910 away from the mount surface (e.g., mount surface 392 of FIG. 3) to define a strap passage 902 that is configured to receive a strap (not illustrated) to attach an elongated object (e.g., wire 396 of FIG. 3) directly to the wire rail 910. The wire rail 910 may attach to, extend from, and/or be supported by a proximal side of the anchor point (e.g., mount portion).

One or more of the anchor points may include a mount portion (e.g., mount portion 928, mount portion 932) that is configured to connect the anchor point to the structure (e.g., structure 390 of FIG. 3). For example, a mount portion (e.g., mount portion 928) may include an adhesive portion 930 that is configured to adhere to the mount surface of the structure. In another example, the mount portion (e.g., mount portion 932) may include one or more fastener apertures (e.g., fastener aperture 934) defined through the mount portion and configured to receive a fastener (e.g., a bolt, a screw) (not illustrated) therethrough to attach the mount portion to the structure. Additional examples of mount portions include fasteners (e.g., a blind hole fastener, a clamp fastener, a mechanical fastener, a T-nut fastener for a T-slot metal frame, a masonry mount, a push mount, a swivel mount, an arrowhead fastener, a fir-tree fastener, an edge-clip mount, a twist-lock fastener configured for receipt into the slot of a rail, a weld stud mount, a cable attachment, a hose attachment), magnets, a friction fit, and the like, and combinations thereof (e.g., a fastener and an adhesive fastener, an adhesive fastener and a magnet). The mount portion may be located on a distal side of the anchor point (e.g., mount portion).

The wire rail 910 may define an elongated keyway (e.g., keyway 940), which is configured to connect to an object support connector 950. The object support connector 950 is configured to attach an elongated object (e.g., wire 396 of FIG. 3) to the wire rail system 900. The keyway 940 is configured to receive and engage a connector portion 952 of the object support connector 950, as is illustrated in FIG. 10. The keyway 940 may be accessible through a slot 942 defined in the face of the wire rail 910. The slot 942 may be elongated. The connector portion 952 may be configured to slide into the keyway 940 (e.g., from an end), snap into the keyway 940, twist into the keyway 940, rotate into the keyway 940, and the like. In one implementation, the connector portion 952 is configured to snap into the keyway 940 by inserting the connector portion 952 perpendicular to the wire rail 910, through the slot 942, and rotating the connector portion 952 until mating profiles match.

In the implementations illustrated in FIGS. 9-11, the keyway (e.g., keyway 940, keyway 1140) includes a receiver portion (e.g., receiver portion 944, receiver portion 1143), which may be upwardly curved. The receiver portion may include one or more detents (e.g., detent 1046, detent 1048) and one or more depressions 1050, which are configured to engage cooperating detents (e.g., detent 946) and/or depressions (e.g., depression 1052, depression 1054) of the connector portion 952 of the object support connector 950.

The object support connector 950 includes an object support 954 that is configured to receive one or more objects (e.g., wire 392 of FIG. 3) to attach the object(s) to the structure. The object support connector 950 may be a mount, a clip mount, a clamp mount, a stacking organizer, a cradle, and the like. In the implementation illustrated in FIG. 9, the object support connector 950 is a cradle mount. The connector portion 952 is configured to connect with the keyway defined in the wire rail, for example, the connector portion 952 is configured for mating attachment to the wire rail 910 at the keyway 940. In this way, the connector portion 952 may be keyed to mate with the keyway, as illustrated in FIG. 10 at (A). The connector portion 952 may include flange 956, which may be curved and outwardly extending. In this way, the connector portion 952 is positionable (e.g., slidable) along the keyway 940 and locked in place. The connector portion 952 is further able to be unlocked from its position and thus is repositionable along the keyway 940 and/or removable from the keyway 940. To assemble, a technician may insert the end of the flange 956 into the receiver 944 and rotate the flange 956 relative to an axis parallel to the length of the keyway 940 to connect the object support connector 950 to the wire rail 910, as illustrated in FIG. 10 at (B). One or more of the arms (e.g., arm 1030 of FIG. 10, arm 1032) of the wire rail 910 may flex to permit the flange 956 to snap into the keyway 940, with the detents and depressions cooperating to interlock the object support connector 950 to the wire rail 910.

One or more components of the wire rail 910 (e.g., the wire rail 910 and one or more of the anchor points) may be integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more components of the wire rail may be assembled from separate plastic parts and fixed together through welding, solvents, adhesives, and the like.

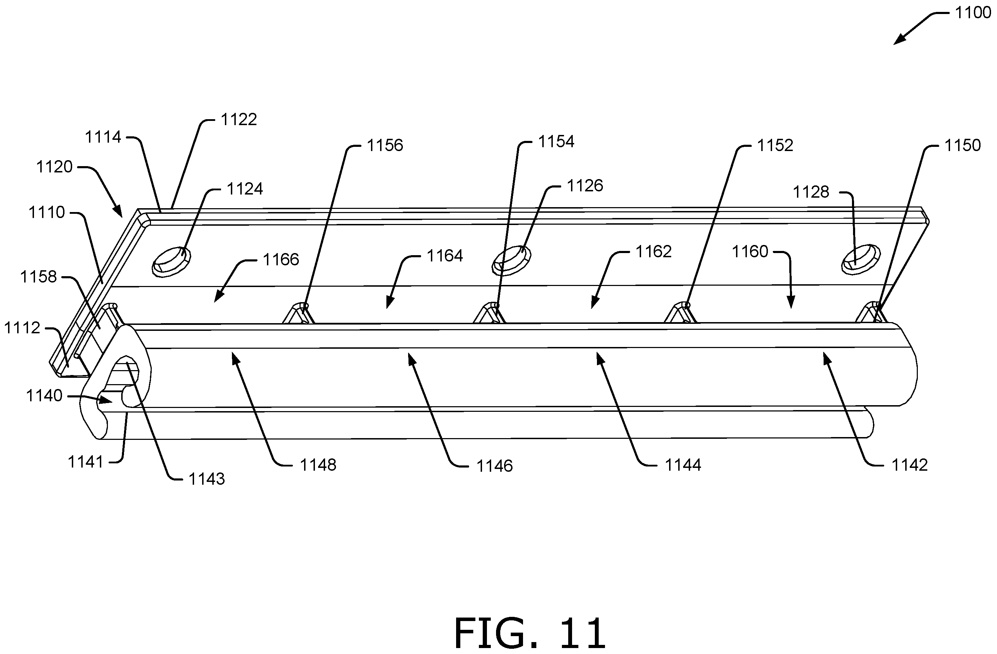

FIG. 11 illustrates another implementation of a wire rail system. The wire rail system is a mount 1100 that is configured for routing elongated objects from a first location to a second location. The mount 1100 includes an elongated base portion 1110 and an elongated saddle portion 1140. The elongated saddle portion 1140 may be spaced apart from the elongated base portion 1110. The elongated saddle portion 1140 (e.g., a connector region of the elongated base portion 1110) is configured to receive an object support connector and/or an elongated object (e.g., wire), for example, via the object support connector, similarly to the mount 200 illustrated in FIGS. 2-4.

The elongated saddle portion 1140 may extend along a substantial portion of the elongated base portion 1110. The elongated saddle portion 1140 defines a plurality of connector regions (e.g., connector region 1142, connector region 1144, connector region 1146, connector region 1148), which may be spaced apart from the elongated base portion 1110 and may extend along a portion of the elongated base portion 1110. The connector regions are configured to receive an object support connector (e.g., object support connector 370 of FIG. 3, object support connector 380 of FIG. 3) for attachment of the object (e.g., wire 396 of FIG. 3) to the mount 1100. The object support connector may be configured to retain the object generally parallel to the length of the mount.

The connector regions are illustrated in FIG. 11 as spaced apart on the elongated saddle portion 1140. A connector region defines at least one passageway (e.g., passageway 1160, passageway 1162, passageway 1164, passageway 1166) through the elongated saddle portion 1140, for example, between two opposing supports. In the aspect of FIG. 11, the passageway 1160 is defined between support 1150 and support 1152, passageway 1162 is defined between support 1152 and support 1154, passageway 1164 is defined between support 1154 and support 1156, and passageway 1166 is defined between support 1156 and support 1158. The passageway configured to receive an object support connector. In aspects, the passageway is configured to receive a strap (e.g., cable tie) to attach the object to the elongated saddle portion at a connector region, with a portion of the strap passed through the passageway, wrapped around the object, and tightened to attach the object to the elongated saddle portion.

At least one connector region of the connector regions is configured to receive the object support connector (e.g., object support connector 370, object support connector 380, object support connector 950) at variable locations. The object support connector is configured to attach the object (e.g., wire 396) to the mount 1100 at variable locations relative to the connector region to vary the position of the object with respect to the elongated saddle portion 1140. To put it another way, the object support connector may attach at a variable location such that the position of the object support connector relative to the connector region is variable. In aspects, the position of the object support connector may be variable by sliding the position of the receiver portion along the elongated saddle portion 1140 at the connector region (e.g., connector region 1142).

The elongated base portion 1110 includes a top side 1112 opposite a bottom side 1114. It should be understood that the top side and the bottom side should not be limited to any specific orientations. The support pillars (e.g., support 1150, support 1152, support 1154, support 1156, support 1158) may space the top side 1112 from the elongated saddle portion 1140. The support pillars may extend generally orthogonal to a plane of the base. One or more of the support pillars may be configured for cutting (e.g., with a cutter tool), snapping (e.g., frangible), or to otherwise be separated to allow a technician to shorten the length of the mount 1100 (e.g., when the mount is too long for the space the technician wants to install it).

The elongated base portion 1110 includes a mount portion 1120 that is configured to connect the elongated base portion 1110 to the structure (e.g., structure 390). The mount portion may include an adhesive portion 1122 that is configured to adhere to a mount surface of the structure. The adhesive portion may include a pre-applied adhesive strip that is covered by a release liner. To install the mount 1100 on the structure, the release liner is peeled off the adhesive strip, and the adhesive portion is then applied to the mount surface to adhere the elongated base portion 1110 to the mount surface. In other aspects, the mount portion 1120 may include one or more fastener apertures (e.g., fastener aperture 1124, fastener aperture 1126, fastener aperture 1128) defined through the base portion 1110 from the top side 1112 to the bottom side 1114. The fastener aperture is configured to receive a fastener (e.g., a bolt, a screw) (not illustrated) therethrough to attach the base portion 1110 to the structure. For example, the fastener may engage a mounting aperture (e.g., a bore) that is defined in the structure (e.g., in a mount surface of the structure).

The mount portion 1120 may include any suitable structure to mount to the structure, some additional examples of which include a fastener (e.g., a blind hole fastener, a clamp fastener, a clamp portion, a mechanical fastener, a T-nut fastener for a T-slot metal frame, a masonry mount, a push mount, a swivel mount, an arrowhead fastener, a fir-tree fastener, an edge-clip mount, a clip fastener, cradle portion, a twist-lock fastener configured for receipt into the slot of a rail, a weld stud mount, a cable attachment, a hose attachment), a magnet, a friction fit, and the like, and combinations thereof (e.g., a fastener and an adhesive fastener, an adhesive fastener and a magnet).

The wire rail 1110 may define an elongated keyway (e.g., keyway 1140), which is configured to connect to an object support connector (e.g., object support connector 950), which is configured to attach an elongated object (e.g., wire 396 of FIG. 3) to the wire rail system 1100. The keyway 1140 is configured to receive and engage a connector portion 952 of the object support connector 950, as is illustrated in FIGS. 9 and 10. The keyway 1140 may be accessible through a slot 1141 defined in the face of the wire rail 1110. The slot may be elongated. The connector portion 1152 may be configured to slide into the keyway 1140 (e.g., from an end), snap into the keyway 1140, twist into the keyway 1140, rotate into the keyway 1140, and the like. In one implementation, the connector portion is configured to snap into the keyway 1140 by inserting the connector portion perpendicular to the wire rail 1110, through the slot 1141, and rotating the connector portion until mating profiles match.

Similarly to the keyway 940 of FIG. 9, in the implementation illustrated in FIG. 11, the keyway 1140 includes a receiver portion 1143, which may be upwardly curved. The receiver portion 1143 may include one or more detents and one or more depressions, which are configured to engage cooperating detents and/or depressions of the connector portion of the object support connector 950. The connector portion is configured to connect with the keyway 1140 defined in the wire rail 1110, for example, the connector portion is configured for mating attachment to the wire rail 1110 at the keyway 1140. In this way, the connector portion may be keyed to mate with the keyway.

One or more components of the wire rail 1110 may be integrally formed of a suitable material(s) through one or more of an injection-molding process, an extrusion process, an additive manufacturing process (e.g., a fused deposition modeling (FDM) process, a three-dimensional (3D) printing process), or another suitable process. In implementations, one or more components of the wire rail may be assembled from separate plastic parts and fixed together through welding, solvents, adhesives, and the like.

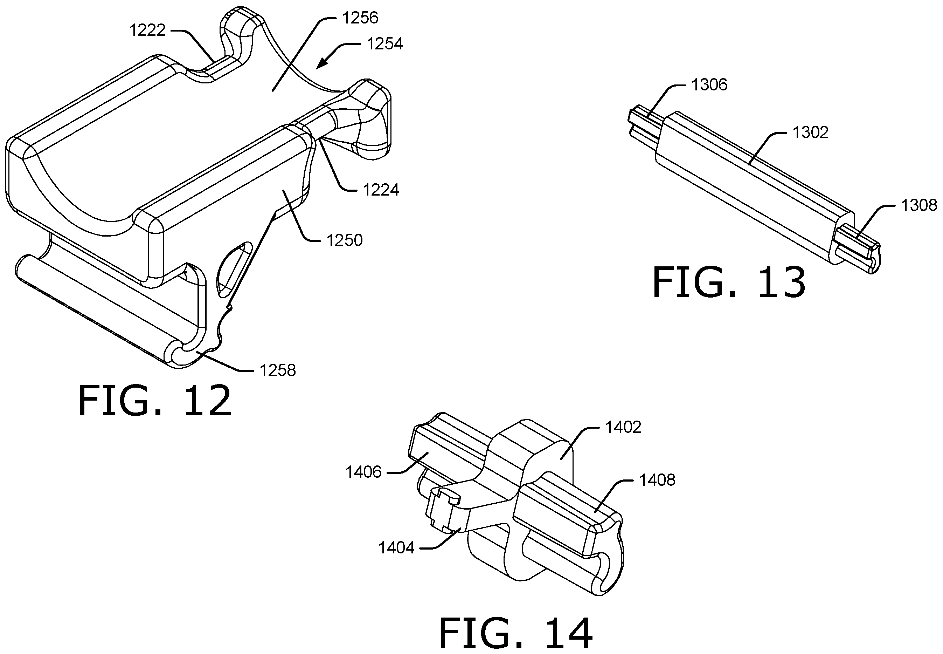

FIG. 12 illustrates another aspect of an object support connector 1250, which is configured for use with the elongated wire rail (e.g., wire rail 910, wire rail 1110), as illustrated in FIGS. 9, 10, and/or 11. The object support connector 1250 includes a connector portion 1258 that, similarly to the flange 956 of FIGS. 9 and 10, is configured to connect with the keyway (e.g., keyway 940, keyway 1140) defined in the wire rail (e.g., wire rail 910, wire rail 1110). The object support connector 1250 includes an object support 1254 that is configured to receive one or more objects (e.g., wire 392 of FIG. 3) to attach the object(s) to the structure. In this aspect, the object support 1254 includes a saddle 1256 configured to receive the objects and at least one groove (e.g., groove 1222, groove 1224) that is configured to receive a strap to hold the objects (e.g., a wire) within the saddle 1256.

A wire rail (e.g., wire rail 910, wire rail 1110) may be formed of one or more segments, which may be joined together via one or more connectors (e.g., connector 1302 of FIG. 13, connector 1402 of FIG. 14). The connector may include a first flange portion (e.g., first flange portion 1306, first flange portion 1406) and/or a second flange portion (e.g., second flange portion 1308, second flange portion 1408). The first flange portion is configured for receipt into a keyway (e.g., keyway 940) of a first elongated wire rail (e.g., elongated wire rail 910) and the second flange portion is configured for receipt into a keyway of a second elongated wire rail to connect the two elongated wire rails together. The aspect of FIG. 14 includes a finger tab 1404 that protrudes from the connector 1402 to provide a finger grip for the technician to hold the connector 1402 as the two rails are connected together.

Some additional examples of wire rail systems are as follows:
Example 1. A mount comprising: an elongated base portion configured to attach to a structure; and an elongated saddle portion having a plurality of connector regions spaced apart from the elongated base portion and extending along a portion of the elongated base portion, the connector regions configured to receive at least one object support connector for attachment of an object to the mount.
Example 2. The mount of example 1, wherein at least one connector region of the connector regions is configured to receive the object support connector at variable locations to vary an attachment position of the object on the mount with respect to the elongated saddle portion.
Example 3. The mount of example 1, wherein at least one of the connector regions is discretely spaced apart on the elongated saddle portion from the other connector regions.
Example 4. The mount of example 1, wherein the elongated base portion includes a top side and the elongated saddle portion includes a plurality of supports that space the top side from the elongated saddle portion.
Example 5. The mount of example 4, wherein a connector region of the connector regions further comprises: a passageway defined through the elongated saddle portion between two opposing supports, the passageway configured to receive the object support connector.
Example 6. The mount of example 5, wherein the object support connector comprises a strap configured to extend through the passageway of the connector region.
Example 7. The mount of example 5, wherein the object support connector comprises a slot configured to slide onto the elongated saddle portion at the connector region.
Example 8. The mount of example 1, wherein the elongated saddle portion further comprises: a first elongated saddle portion; and a second elongated saddle portion, the first and second elongated saddle portions linearly oriented to one another on the elongated base portion.
Example 9. The mount of example 1, wherein the elongated base portion further comprises a mount portion configured to connect the elongated base portion to the structure.
Example 10. The mount of example 9, wherein the mount portion further comprises an adhesive portion configured to adhere to a mount surface of the structure.
Example 11. The mount of example 9, wherein the elongated base portion includes a top side opposite a bottom side and the mount portion further comprises a fastener aperture defined through the base portion from the top side to the bottom side, the fastener aperture configured to receive a fastener therethrough to attach the base portion to the structure.
Example 12. The mount of example 1, further comprising the object support connector, which is configured to attach the object to the mount at variable locations relative to a connector region of the connector regions to vary a position of the object with respect to the elongated saddle portion.
Example 13. The mount of example 1, wherein the elongated base portion and the elongated saddle portion are integrally formed.
Example 14. An object support connector configured to attach an object to a fixing, comprising: a clip portion configured to connect with the fixing, the clip portion comprising: a first elongated arm; and a second elongated arm spaced apart from the first elongated arm to define a slot therebetween configured to receive a portion of the fixing; and an object support that extends from the clip portion and is configured to support the object.
Example 15. The object support connector of example 14, wherein the clip portion is formed of a flexible material configured to enable the clip portion to flex to receive the fixing portion in the slot and generate a friction fit on the fixing portion.
Example 16. The object support connector of example 14, wherein the clip portion further comprises a cross-piece that extends between proximal ends of the first and second elongated arms and the first and second elongated arms extend away from the cross-piece.
Example 17. The object support connector of example 14, wherein the object support further comprises a passageway configured to receive a strap to fasten the object to the object support.
Example 18. The object support connector of example 14, wherein the object support further comprises a conduit configured to receive the object therethrough.
Example 19. The object support connector of example 14, wherein the object support comprises a cradle portion configured to receive the object.
Example 20. The object support connector of example 14, wherein the clip portion and the object support are integrally formed.
Example 21. A system (e.g. 900) comprising: a first anchor point (e.g. 920) configured to attach to a structure; a second anchor point (e.g. 922) configured to attach to a structure; an elongated wire rail (e.g. 910) that extends between the first anchor point and the second anchor point, the elongated wire rail defining an elongated keyway (e.g. 940); and an object support connector (e.g. 950) configured to receive an elongated article, the object support comprising a connector portion (e.g. 952) configured for attachment to the elongated wire rail at the elongated keyway.
Example 20. The system of example 19, wherein at least one of the first anchor point (e.g. 920) or the second anchor point (e.g. 922) spaces the elongated wire rail (e.g. 910) from a distal side of the anchor point to define a strap passage (e.g. 902) configured to receive a strap to attach an elongated object to the elongated wire rail.
Example 21. The system of example 19, wherein the connector portion (e.g. 952) is keyed to mate with the keyway (e.g. 910) and includes a curved and upwardly curved flange (e.g. 965) configured for receipt into a curved and upwardly receiver portion (e.g. 944) of the keyway (e.g. 940).

The components of the disclosed wire rail systems may be fabricated of any suitable material, including, but not limited to, a polymer (e.g., a polymeric material) and/or a composite. Suitable polymeric materials may include one or more of polyvinyl chloride (PVC), polyamide (PA), polypropylene (PP), polyethylene (PE), polyphenylene sulfide (PPS), polyether ether ketone (PEEK), polyaryletherketone (PAEK), ethylene tetrafluoroethylene (ETFE), polyacetal (POM), polybutylene terephthalate (PBT), ultraviolet stabilized polyacetal (POMUV), acrylonitrile styrene acrylate (ASA), cross-linked thermoplastics, partially cross-linked thermoplastics, higher-temperature resins, ultraviolet (UV) resistant resins, other thermoplastic materials, and the like, and copolymers, blends, or alloys thereof)), as well as, fiber-reinforced materials. A suitable polymeric material may include one or more additives (e.g., heat stabilizers (e.g., copper iodide), impact modifiers (e.g., polyolefin, urethane, rubber), UV stabilizers (e.g., carbon black, hindered amine light stabilizers (HALS)), flame retardants (e.g., nitrogen-based halogen-free flame retardants, melamine cyanurate, melamine borate, ammonium polyphosphate), colorants, and the like). A suitable polymeric material may be nonconductive. One or more of the components of the disclosed fixings may be formed of the same material as the other components, or of a different material than the other components.

In this description of aspects of wire rail systems, ordinal numbers such as "first" and "second" are used only to distinguish between different described objects, and have no limitation on a location, a sequence, a priority, a quantity, content, or the like of the described objects. For example, a "first elongated saddle portion" is used as an example, and there may be one or more "elongated saddle portions." Additionally, objects modified by different ordinal numbers may be the same or different objects. For example, if the described object is an "elongated arm," a "first elongated arm" and a "second elongated arm" may be the same or different elongated arms.

Unless context dictates otherwise, use herein of the term "elongated" refers to a configuration or shape having a length which is longer than its width, although the width need not be uniform. Unless context dictates otherwise, use herein of the term "substantial portion," refers to a portion of at least about 50%. In some aspects, the substantial portion is at least about 60%, at least about 70%, at least about 75%, at least about 80%, at least about 85%, at least about 88%, at least about 90%, at least about 91%, at least about 92%, at least about 93%, at least about 94%, at least about 95%, at least about 96%, at least about 97%, at least about 98%, or at least about 99%. Unless context dictates otherwise, use herein of the word "or" may be considered use of an "inclusive or," or a term that permits inclusion or application of one or more items that are linked by the word "or" (e.g., a phrase "A or B" may be interpreted as permitting just "A," as permitting just "B," or as permitting both "A" and "B"). Also, as used herein, a phrase referring to "at least one of" a list of items refers to any combination of those items, including single members. For instance, "at least one of a, b, or c" can cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c, or any other ordering of a, b, and c). Further, items represented in the accompanying figures and terms discussed herein may be indicative of one or more items or terms, and thus reference may be made interchangeably to single or plural forms of the items and terms in this written description.

In aspects, a wire rail system may include one or more of the features of the wire rail systems illustrated in the Drawings and described above. Although implementations of wire rail systems have been described in language specific to certain features and/or methods, the specific features and methods disclosed herein are example implementations.

## Claims

1. A mount (200) comprising:
an elongated base portion (210) configured to attach to a structure (390); and
an elongated saddle portion (240) having a plurality of connector regions (242, 244) spaced apart from the elongated base portion (210) and extending along a portion of the elongated base portion (210), the connector regions (242, 244) configured to receive at least one object support connector (370, 380) for attachment of an object (396) to the mount (200).

2. The mount of claim 1, wherein at least one connector region (242) of the connector regions is configured to receive the object support connector (370, 380) at variable locations to vary an attachment position of the object (396) on the mount with respect to the elongated saddle portion.

3. The mount of any one of the preceding claims, wherein at least one of the connector regions (242, 244) is discretely spaced apart on the elongated saddle portion (240) from the other connector regions.

4. The mount of any one of the preceding claims, wherein the elongated base portion (210) includes a top side (212) and the elongated saddle portion (240) includes a plurality of supports (250, 252) that space the top side (212) from the elongated saddle portion (240).

5. The mount of claim 4, wherein a connector region (242) of the connector regions further comprises:
a passageway (260) defined through the elongated saddle portion (240) between two opposing supports (250, 252), the passageway configured to receive the object support connector (370, 380), in particular with the object support connector (370) comprising a strap (284) configured to extend through the passageway (260) of the connector region (242).

6. The mount of any one of the preceding claims, wherein the object support connector (380) comprises a slot (282) configured to slide onto the elongated saddle portion (240) at the connector region (242).

7. The mount of any one of the preceding claims, wherein the elongated saddle portion (240) further comprises:
a first elongated saddle portion (520); and
a second elongated saddle portion (550), the first and second elongated saddle portions linearly oriented to one another on the elongated base portion.

8. The mount of any one of the preceding claims, wherein the elongated base portion further comprises:
a mount portion (220) configured to connect the elongated base portion (210) to the structure (290), in particular with the mount portion (220) further comprising an adhesive portion (222) configured to adhere to a mount surface (292) of the structure (290).

9. The mount of claim 8, wherein the elongated base portion (210) includes a top side (212) opposite a bottom side (214) and the mount portion (220) further comprises:
a fastener aperture (224) defined through the base portion (210) from the top side (212) to the bottom side (214), the fastener aperture (224) configured to receive a fastener therethrough to attach the base portion (210) to the structure (290).

10. The mount of any one of the preceding claims, further comprising:
the object support connector (370, 380), which is configured to attach the object (396) to the mount (200) at variable locations relative to a connector region (242) of the connector regions to vary a position of the object (396) with respect to the elongated saddle portion (240).

11. An object support connector (380) configured to attach an object to a fixing, comprising:
a clip portion (704) configured to connect with the fixing, the clip portion comprising:
a first elongated arm (706); and
a second elongated arm (708) spaced apart from the first elongated arm to define a slot (710) therebetween configured to receive a portion of the fixing; and
an object support (714) that extends from the clip portion and is configured to support the object.

12. The object support connector (380, 602, 702, 802) of claim 11, wherein the object support (714) further comprises at least one of:
a passageway (716) configured to receive a strap to fasten the object to the object support; or
a conduit (616, 716) configured to receive the object therethrough; or
a cradle portion (816) configured to receive the object.

13. A system (900) comprising:
a first anchor point (920) configured to attach to a structure;
a second anchor point (922) configured to attach to the structure;
an elongated wire rail (910) that extends between the first anchor point and the second anchor point, the elongated wire rail defining an elongated keyway (940); and
an object support connector (950) configured to receive an elongated article, the object support comprising a connector portion (952) configured for attachment to the elongated wire rail at the elongated keyway.

14. The system of claim 13, wherein at least one of the first anchor point (920) or the second anchor point (922) spaces the elongated wire rail (910) from a distal side of the anchor point to define a strap passage (902) configured to receive a strap to attach an elongated object to the elongated wire rail.

15. The system of any one of claims 13 or 14, wherein the connector portion (952) is keyed to mate with the keyway (910) and includes a curved and upwardly curved flange (965) configured for receipt into a curved and upwardly receiver portion (944) of the keyway (940).
